# EUROPEAN PATENT SPECIFICATION

(11) **EP 0 830 783 B1**
(45) Date of publication and mention of the grant of the patent: **20.12.2000**
(21) Application number: 96920357.9
(22) Date of filing: 22.05.1996
(51) Int. Cl.: H04N 5/913

(54) **METHOD AND APPARATUS FOR COPY PROTECTION FOR VARIOUS RECORDING MEDIA USING A VIDEO FINGER PRINT**
VERFAHREN UND ANLAGE ZUM KOPIERSCHUTZ FÜR VERSCHIEDENE AUFNAHMEMEDIEN, WOBEI EIN FINGERABDRUCK BENUTZT WIRD
PROCEDE ET APPAREIL DE PROTECTION CONTRE LES COPIES POUR DIVERS SUPPORTS D'ENREGISTREMENT, FAISANT APPEL A UNE EMPREINTE DIGITALE

(30) Priority: 07.06.1995 US 473047
(43) Date of publication of application: 25.03.1998
(73) Proprietor: MACROVISION CORPORATION, Sunnyvale, CA 94089 (US)
(72) Inventor: RYAN, John, Cupertino, CA 95014 (US); COPELAND, Gregory, C., San Jose, CA 95118 (US)
(74) Representative: Needle, Jacqueline
(86) International application number: PCT/US96/07376
(87) International publication number: WO 96/41468

(56) References cited:
- EP-A- 0 400 906
- EP-A- 0 545 472
- WO-A-96/00963
- WO-A-96/06503
- US-A- 4 969 041

## Description

The present invention relates to a method and apparatus for providing and reading copy-protection for program distribution media.

The optical compact disc (CD) is a superb medium for the storage of digital data. It has high packing density, low manufacturing cost and a relative immunity to mishandling. The success of the CD as a carrier of high fidelity audio is likely to be repeated in the realm of multimedia, where the technology has been adapted to the broader task of storing digitized audio, video and alphanumeric information for a variety of purposes, conforming to a plethora of standards such as DVD, CD ROM, CD Video, CD-I and the like.

To date, CD ROM software copyright owners have not had to contend with the rampant piracy (unauthorized copying) which has afflicted the videocassette and audiocassette media. This is almost entirely due to the large capital investment costs associated with mastering and replicating CDs, which creates substantial financial barriers to piracy. However, compact disc recording machines capable of making perfect copies of data from pre-recorded CDs are now available for professional users for about two thousand dollars and it is very likely that in a few years from now, consumer affordable player-recorders will be widely available. This will create a serious conflict between software producers' needs to sell their product for $50+ to make a profit, and the consumers' resulting ability to make a perfect copy for the price of a blank disc, projected to be in the $10 to $20 range soon. The problem is likely to be much more severe than the piracy afflicting the video business, because, while few people want to watch a movie more than once, many multimedia software products are intended to be used repeatedly, so that ownership rather than rental is likely to be the norm. There is, therefore, a need to ensure that consumers can only enjoy a software manufacturer's products by playing a legitimate CD.

One approach to this piracy problem would be to include anti-copy circuitry within CD-recorders, mandated by general agreement between the manufacturers, similar to the Serial Copy Management System (SCMS) developed for the Digital Audio Tape (DAT) medium. With this scheme, a CD-recorder would look for a special copy-prohibit instruction in the digital data and, on finding it, would stop recording. However, such a system offers very limited protection. Even when the SCMS system was first proposed for the DAT medium, it was fully appreciated that it presented little protection from professional or even amateur pirates, who, knowing the data format, could, and subsequently did, build inexpensive "black boxes" (electronic circuits) to remove the copy-prohibit instruction thereby enabling the recorders to make unlimited copies.

US-A-4969041 describes the transmission of data unobtrusively embedded in a video signal, for example, to identify the originator of a television program. EP-A-0400906 describes an anti copying scheme in which code sequences are inserted into a video signal and their detection is used to interrupt the operation of recording circuitry.

However, it is believed that all anti-copy systems which rely upon copy-prohibit instructions can be defeated by black boxes of the same order of complexity and cost as that of the circuitry which looks for these instructions. Such systems are therefore of limited effectiveness. For example, a black box may be connected in line between a CD-player and a CD-recorder to look for copy-prohibit instructions in the data stream and would remove or modify these instructions. It is to be expected, therefore, that if this kind of anti-copy system were adopted, inexpensive black boxes would proliferate.

A further difficulty with this approach to copy protection is the need to ensure that all CD-recorder manufacturers include the necessary detection circuitry in their products. Some manufacturers may not comply, perhaps in the expectation of increasing their market share. The presence of even a small percentage of non-complying machines in the marketplace could jeopardize the viability of this type of copy-protection scheme.

For the foregoing reasons, there is a need for a copy-protection system for the compact disc medium which provides a high level of protection to software rights owners, which is immune to black boxes, and which is not compromised by the refusal of a few hardware manufacturers to comply with the standard.

EP-A-0545472 describes a method of controlling the reading of copy-protected program distribution media, where copy-protected program distribution media has had program data recorded thereon, and an authenticating signature added thereto, which authenticating signature cannot be read by means reading the recorded program data,
the method comprising the steps of:
detecting the presence of the authenticating signature in a media player; and
using the detection of the authenticating signature to control reading of the recorded program data by the media player.

The present invention provides a method of controlling the reading of copy-protected program distribution media as defined above, the method of the invention being characterised in that the copy-protected program distribution media has additionally had a finger print signal added to the program data recorded thereon, and
in that the method further comprises the step of detecting the presence of the finger print in the program data recorded on a program distribution medium, and enabling the media player to read the program data only when either no finger print signal is detected or both the finger print signal and the authenticating signal are detected.

An embodiment of a method of the invention is a conditional play system (CPS) which provides copyright protection for previously recorded material on various media, for example, compact disc media or digital video discs. Since the invention to be described is applicable to many different media, the description which follows will describe its application to the digital video disc (DVD) medium, which is a version of compact disc media.

An embodiment of a method of the invention overcomes the disadvantages of the previous schemes described above as the method does not attempt to prevent DVD-recorders from copying data from protected DVDs. Instead, the embodiment enables it to be determined whether a particular DVD is a legitimate original or an illicit copy. If legitimate, the player plays the DVD normally. If not, the player shuts down and may display an appropriate copyright warning message.

During manufacture of the master disc, the authenticating signature is impressed on the disc in a manner that cannot be read by a DVD-player's normal optical pickup, but which can easily be detected by other means. The nature of this authenticating signature is such that it is faithfully transferred to all production discs made from this master. However, if an illicit copy of a production disc is made using a DVD-recorder, the copy may contain a faithful replica of the disc's program data, but the authenticating signature is not transferred to the copy. All DVD-players conforming to this copy protection standard would include a subsystem to search for the authenticating signature. If the signature is not found, the DVD-player will not play the disc.

According to a further aspect of the present invention there is provided apparatus for reading copy-protected program distribution media, where copy-protected program distribution media has had program data recorded thereon and an authenticating signature added thereto, which authenticating signature cannot be read by means reading the recorded program data, said apparatus comprising an authenticating signature detector, and control means responsive to the output of the authenticating signature detector to control the input of recorded program data from a program distribution medium to a data output device of the apparatus arranged to read the recorded program data, said apparatus being characterised in that the copy-protected program distribution media has additionally had a finger print signal added to the program data recorded thereon, in that the apparatus further comprises a finger print detector for detecting the presence of the finger print in the program data recorded on a program distribution medium, and in that said control means is additionally responsive to the output of the finger print detector and is arranged to enable the input of recorded program data from a program distribution medium to said data output device only when either no finger print signal is detected or both the finger print signal and the authenticating signature are detected.

The present invention also extends to a method of providing copy-protection for program distribution media, the method comprising the steps of recording program data onto a program distribution medium, and adding an authenticating signature to the program distribution medium, the authenticating signature being arranged to be unreadable by means able to read the program data to provide copy-protection to the program distribution medium, the method being characterised by further comprising the step of adding a finger print signal to the program data recorded on the program distribution medium such that the existence of both an authenticating signature and a finger print signal has to be detected to identify a genuine copy-protected program distribution medium.

According to a still further aspect of the present invention there is provided apparatus for providing copy-protection to program distribution media, said apparatus comprising mastering means for recording program data onto a program distribution medium, and means for generating an authenticating signal and outputting the authenticating signal to said mastering means, wherein, in response to said authenticating signal, said mastering means adds an authenticating signature to the program distribution medium to provide copy-protection therefor, the authenticating signature being arranged to be unreadable by means able to read the recorded program data, said apparatus being characterised by further comprising a finger print inserter arranged to generate and add a finger print signal to the program data to be recorded on the program distribution medium if an authenticating signature is added to that program distribution medium such that a copy-protected program distribution medium has both an authenticating signature and a finger print signal.

For compact disc applications such as DVD, the authenticating signature is preferably impressed on the master disc by radially position modulating the writing head that creates the master disc by a few tens of nanometers peak-to-peak about the head's normal position. This authenticating signature can then be read in the DVD-player with a minimal increase in player complexity by taking advantage of the player's existing radial tracking servo system, as will now be described.

In all DVD-players, the optical reading head is maintained on track by a sophisticated error detection system, as a normal part of the player's function. If, for example, the head moves slightly toward one or other side of the track, or the track moves from under the head due to an off centre spindle, an error is detected and, after amplification, is applied to the radial actuator to re-centre the head of the track. Since the optical reading must also track a deliberately induced radial position-modulation defining an authenticating signature, this error voltage therefore contains a signal component corresponding to this, along with other signals corresponding to elliptical errors and the like. Therefore, by appropriate processing of this error voltage, the authenticating signature can be detected.

The position-modulation signal may be a simple sinusoid of frequency such that either an integral number of cycles is impressed during each revolution of the disc, or one complete cycle is impressed during an integral number of revolutions of the disc. In either case, extraction of the authenticating signature from the various other tracking error signals is simplified. A relevant type of abnormal scanning is described in US-A-5,247,507 which describes a wobble of the normal tracking signal causing the tracking to meander in a sinusoidal path about a mean frequency.

Clearly, the copy protection system of an embodiment of the invention cannot be compromised by any external black box connected between a DVD-player's signal output and a DVD-recorder's signal input, since the authenticating signature is not transferred to the recorder.

Neither is the system compromised if a few manufacturers choose not to build the authenticating system into their DVD-players, because pirate disc makers would have to label their products as capable of being played only on the limited set of non-complying DVD-players on the market. The pirate disc maker would in effect be advertising the illegality of their product and inviting prosecution.

Methods of the invention utilise the authenticating signature, for example, the special authenticating signature described above, which is impressed on legitimately manufactured DVDs or other media, in a manner such that this authenticating signature is not part of the recorded "program" signal and is therefore not passed on to an illicit copy.

There are three basic forms of conditional play systems, which are now described, which do provide copy protection, but which also have disadvantages which are not apparent in an embodiment of the invention.

In the first conditional play system, it is required that all players conforming to the particular standard in question - DVD, for example - must look for an authenticating signature on each individual DVD to be played. The DVD player's control system would then be designed to stop playing the DVD if the authenticating signature were missing. Since, as stated earlier, an illicit copy of a DVD would not have the authenticating signature, such copies would in effect be useless. Effective copy-protection is therefore accomplished even though the illicit copy may contain a perfect replica of the program information.

However, this scheme has the disadvantage that all legitimate DVDs which are intended to be played on these special DVD-players must have an authenticating signature added, and this scheme is therefore only suitable for closed systems where a systems controller can mandate that all DVDs be copy protected. However, it is required from a commercialization viewpoint to be able to offer and charge for copy-protection on a program-by-program basis.

In a second conditional play system, DVDs to be copy-protected contain an instruction to tell DVD-players to look for the authenticating signature and not to play such DVDs in the absence thereof. The instruction could be recorded, for example, on the initialization section of the DVD - the part normally reserved for non-program information. The instruction would be acted upon by a special sub-system in all compliant DVD-players. Thus, only originals of copy-protected DVDs could be played - illicit copies would be rejected. This instruction would be omitted from DVDs of programs which did not require copy-protection and for such programs both original DVDs and copies thereof would play normally. In this manner copy-protection can be offered on a program-by-program basis through the use or non-use of this "Look for An Authenticating Signature And Play Only If Found" instruction.

However, although this second conditional play system allows the copy-protection feature to be offered on a program-by-program basis, it could in principle be compromised by special black boxes connected in the signal line between the DVD-player and the DVD-recorder. These black boxes would search for this "Look For ---" instruction in the data stream from the DVD-player and remove or modify it so that the resultant illicit copy would not trigger the authenticating procedure in DVD-players.

A third conditional play system, called the programmable conditional play system (PCPS) overcomes the disadvantages of the above described systems and provides a copy-protection scheme which can be activated on a program-by-program basis and which is also highly resistant to black box attack. With this system only licensed, so called legitimate manufacturers, could actually make discs. The data going onto the disc is encrypted using a public encryption system with a private key. These keys have to be kept at each legitimate manufacturer of the master disc. Clearly any one trying to protect a consumer recordable device has to be able to make discs to play on their own machines for their own use.

However, the security of the third system could be compromised by the need to give out keys to everyone. Therefore the value of the third system rests in a closed system. Since a user does not want anybody else making discs to play on these machines, it is not advisable to have an open format. In the event that somebody would make a universal disc recording that just happened to be able to play on these machines then the purpose of this system would be defeated.

However, most new Digital Video Disc (DVD) formats being discussed are more open formats so that anybody should be able to make discs play in the players. It is anticipated that the next generation of digital formats will be a consumer recorded product within five years. Consumers will be able to use it as they currently use their VHS Machines. Therefore any system requiring the data to be utilised under a secret key is less desirable.

In an embodiment of the invention, which might be referred to as a finger print conditional play system, a "flag" is added, for example, in the video system instructing the player either to play a disc only if there is a wobbly track or to play the disc unconditionally. This flag signal cannot be easy to remove. A method of accomplishing this flag is to add a video finger print signal to the input video at a low level. Important elements of this video finger print are 1) low visibility in the video signal, 2) ease of detection and 3) difficulty of bypass effect. It is not sufficient just to add a bit in the vertical blanking space because it is easily removed. In a video signal the viewer can tolerate a certain amount of noise or error.

With such a finger print system the goals listed above can be achieved. In the case of digital data, one bit or one single error in one bit, can destroy a complete computer program. The destruction can be anything from minor to catastrophic. In video there can be many errors in the signal, so long as the resultant picture is fine.

The video finger print is easy to remove within the video domain. It is even relatively easy to remove in the digital video domain, but it is very difficult to remove in the MPEG domain. Most relevant digital video systems will use one or more versions of the Motion Picture Experts Group format. These formats involve video compression techniques for more efficient data transfer. There is no way of looking at MPEG data and locating something. MPEG is a non-linear system. Therefore, there is nothing in the MPEG data which informs that the video is being lifted or not lifted. A pirate would have to decode the MPEG signal to baseband video. At this point the finger print could be removed, but now the pirate has to recode it again to MPEG to make a disc. Encoding is a major operation. It is not a trivial thing. This is not a foolproof system, and can be circumvented if there is access to a MPEG encoder, but such a device costs hundreds of thousands of dollars.

To implement the video finger print, a video finger print signal is added to the video prior to MPEG encoding. The video finger print signal is implemented by adding a small amount of lift to field one, approximately one milli-volt to field one, and subtracting a milli-volt of lift from field two. This would be done all the way through the movie or other video recording. The receiving device would continuously store field one and then subtract it from field two. Because two opposites are being subtracted, the video finger print signals add and the video signal subtracts out. The result is integrated over a period of time, a few seconds would suffice. A voltage will build up that can be detected. The player detects this signal after MPEG decoding. If the signal is present, the player knows that the disc is a copy protected disc. The player will look to see if the track is wobbly by looking at the servo signal. The detected flag in the video system says to the player to play a disc only if it sees an authentication signature. If no video finger print signal is detected, the player will not look for an authentication signature and will play unconditionally.

The above description is based upon the premise that the disc would be carrying a video signal. Many digital video discs may be used for computer data because of their great data handling capacity. However, it is likely that for the vast majority of applications, the computer program will also involve video.

Embodiments of the present invention will hereinafter be described, by way of example, with reference to the accompanying drawings, in which:
Figure 1 is a block diagram of mastering process hardware showing apparatus of an embodiment of the invention; and
Figure 2 is a block diagram of a compact disc playback device illustrating an embodiment of the invention.

The present invention is applicable to all disc media and to other media, such as magnetic tape. Embodiments of the invention offer a high level of protection to software rights owners, are immune to black boxes, and are not compromised by the refusal of a few hardware manufacturers to comply with the standard.

As discussed above, it is desirable to be able to offer copy-protection to copyright holders on a program-by-program basis and to receive a per-program fee or a per-disc fee in return. This is accomplished in a finger print conditional play system (FPCPS) using a combination of a finger print system and an authenticating signature to permit the DVD-player, for example, to handle either copy protected or non-copy-protected discs in a manner that is difficult or prohibitively expensive and time consuming to compromise, using black boxes.

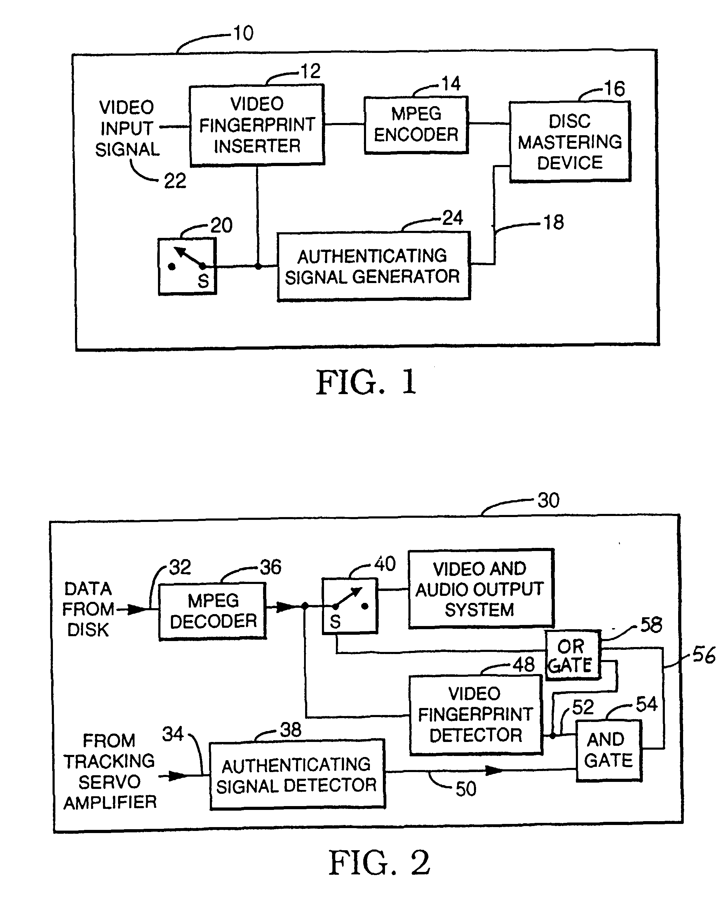

Figure 1 shows a copy protection recording apparatus 10 which accepts a video signal from a conventional source at input terminal 22, and inputs the video signal to video finger print inserter 12. This conventional video source may be in a 525/60 format or a 625/50 format. Additionally, video finger print inserter 12 receives copyright material command signal from a switch 20 to insert a video finger print signal into the video signal prior to MPEG encoding. The video finger print signal is implemented by adding a small amount of lift to field one, approximately one milli-volt, and subtracting a milli-volt of lift from field two. This alternate field insertion is done all the way through the movie or other video recording. The video finger print inserter 12 inserts the video finger print signal only when the switch 20 is in the Copyright position as shown in Figure 1. When the switch 20 is in the Not Copyright position, no video finger print insertion takes place. The output of video finger print inserter 12 is coupled to MPEG encoder 14. MPEG encoder 14 converts the conventional video signal with or without a video finger print signal to a MPEG format signal. The output of MPEG encoder 14 is coupled to a disc mastering device 16 for making master discs.

Switch 20 is also coupled to an input of an authenticating signal generator 24. Authenticating signal generator 24 is arranged to generate an authenticating signature 18, the nature and purpose of which is described above. The output of the authenticating signal generator 24 is connected to the radial actuator within the disc mastering system only when the Copyright mode is selected by the switch 20.

The companion copy-protection apparatus 30 which may be contained within a DVD-player is shown in Figure 2. MPEG program data from a DVD is input on line 32, is appropriately decoded and error corrected, and is input to a MPEG decoder 36. The decoder 36 converts the MPEG program data to a video signal which may or may not include a video finger print signal.

The output of the MPEG decoder 36 is coupled to an input of a switch 40 and to an input of a video finger print detector 48. Video finger print detector 48 continuously stores field one and then subtracts it from field two of each frame. Video finger print detector 48 is arranged to subtract two opposite video finger print signals, the video finger print signals add and the video signal subtracts out. Video finger print detector 48 integrates the result over a period of time, a few seconds would suffice. A build up voltage develops that can be detected. If the video finger print signal is present, the player knows that the disc contains copyright material. The video finger print detector 48 generates a copy protection signal 52 on its output which is coupled to a first input of AND Gate 54.

The error signal from the DVD-player's radical tracking servo amplifier on line 34 is input to an authenticating signal detector 38. As explained above, this signal will have a component corresponding to the authenticating signature.

Authenticating signal detector 38 is arranged to generate a binary output on its output 50 which corresponds to the presence or absence of the authenticating signature at its input. For example, this output may be a logical 1 in the presence of the authenticating signature, and a logical 0 in its absence.

The logic levels are chosen so that AND Gate 54 causes an output when the authenticating signature is detected. AND Gate 54 outputs a signal 56 to OR Gate 58 when both the video finger print signal and the authenticating signature are detected. The second input to OR Gate 58 is the output from video finger print detector 48 only when no video finger print is selected. The output of OR Gate 58 is coupled to the selector of the switch 40 to connect the output of the MPEG decoder 36 to video and audio output system only when both the video finger print signal and the authenticating signature signals are present or when the video finger print signal is not present.

A finger print conditional play system of the invention has the following responses under different circumstances:
- When an original copy-protected or non copy-protected disc is played, the presence or absence of the video finger print signal causes the switch 40 to correctly select the MPEG decoded video. Consequently, all original discs will be played normally.
- When a copy of a non copy-protected disc is played, the absence of the video finger print also causes switch 40 to correctly select the MPEG decoded video, again allowing such discs to play normally.
- However, when an illicit copy of a copy-protected disc is played, the absence of the authenticating signature causes switch 40 to correctly not select MPEG decoded video signal.

The security of the video finger print makes it very difficult or uneconomical for a pirate to make playable copies of protected discs.

To make playable copies of copy-protected discs, i.e. to defeat this scheme, a pirate must do one of the following:
1. Detect and remove the video finger print signal.
2. Re-encode the video signal to an MPEG signal. As discussed above, this is very expensive.
3. Add a viable authenticating signature to illicit copies as the discs are being recorded, so that compliant DVD-players will play these discs normally. This is possible, but to do so the pirate needs to make major modifications to a DVD-recorder to enable it to lay down radially position-modulated tracks. Such modifications are well beyond the capabilities of consumers and software dealers. However, it is unrealistic to insist that a well-financed pirate operation could not find a way to do it. There are various ways to make it more difficult for a pirate to "forge" an authenticating signature, but these all depend to greater or lesser extent on the exact capabilities of the radial servo system (if any) on available DVD-recorders. For example, the signature may be in the form of an impulse function (rather than a simple sinusoid), such that the radial servo of a commercially available DVD-recorder might not be able to track it. Of course, if the pirate has unlimited financial resources, he could invest in a professional disc mastering system and make the necessary modifications.

As a practical matter, however, the ability of this system and method to eliminate piracy at the consumer, dealer and technically knowledgeable professional level, should be extremely valuable.

Embodiments of the present invention have been described particularly for use with DVD's and other compact disc formats. However, the invention is also applicable to magnetic tape formats. In this latter case, the authenticating signature may be added to the control track of the tape.

It will be appreciated that further modifications and variations may be made to the embodiments as described and illustrated within the scope of the appended claims.

## Claims

1. A method of controlling the reading of copy-protected program distribution media, where copy-protected program distribution media has had program data recorded thereon, and an authenticating signature (50) added thereto, which authenticating signature cannot be read by means reading the recorded program data,
the method comprising the steps of:
detecting (38) the presence of the authenticating signature in a media player (30); and
using the detection of the authenticating signature to control reading of the recorded program data by the media player (30),
the method being characterised in that the copy-protected program distribution media has additionally had a finger print signal (52) added to the program data recorded thereon, and
in that the method further comprises the step of detecting (48) the presence of the finger print in the program data recorded on a program distribution medium, and enabling the media player (30) to read the program data only when either no finger print signal is detected or both the finger print signal and the authenticating signal are detected.

2. A method of controlling the reading of copy-protected program distribution media as claimed in Claim 1, wherein said program distribution medium is an optical disc.

3. A method of controlling the reading of copy-protected program distribution media as claimed in Claim 1 or Claim 2, wherein the program data has been encoded before being recorded on the program distribution medium, and wherein the method further comprises the step of decoding the recorded program data in the media player (30).

4. Apparatus for reading copy-protected program distribution media, where copy-protected program distribution media has had program data recorded thereon and an authenticating signature (50) added thereto, which authenticating signature cannot be read by means reading the recorded program data, said apparatus (30) comprising an authenticating signature detector (38), and control means (54, 58, 40) responsive to the output of the authenticating signature detector (38) to control the input of recorded program data from a program distribution medium to a data output device of the apparatus (30) arranged to read the recorded program data, said apparatus being characterised in that the copy-protected program distribution media has additionally had a finger print signal (52) added to the program data recorded thereon, in that the apparatus (30) further comprises a finger print detector (48) for detecting the presence of the finger print in the program data recorded on a program distribution medium, and in that said control means (54, 58, 40) is additionally responsive to the output of the finger print detector (48) and is arranged to enable the input of recorded program data from a program distribution medium to said data output device only when either no finger print signal is detected or both the finger print signal and the authenticating signature are detected.

5. Apparatus for reading copy-protected program distribution media as claimed in Claim 4, wherein said program distribution medium is an optical disc.

6. Apparatus for reading copy-protected program distribution media as claimed in Claim 4 or Claim 5, wherein said recorded program data comprises a video signal, and said data output device is a video and audio output system.

7. Apparatus for reading copy-protected program distribution media as claimed in any of Claims 4 to 6, wherein said control means (54, 58, 40) comprises a selector switch (40) controllable to connect recorded program data to said data output device.

8. Apparatus for reading copy-protected program distribution media as claimed in Claim 7, wherein said selector switch (40) is connected to the output of a program data decoder (36).

9. A method of providing copy-protection for program distribution media, the method comprising the steps of recording program data (22) onto a program distribution medium, and adding an authenticating signature to the program distribution medium, the authenticating signature being arranged to be unreadable by means able to read the program data to provide copy-protection to the program distribution medium, the method being characterised by further comprising the step of adding a finger print signal (12) to the program data (22) recorded on the program distribution medium such that the existence of both an authenticating signature and a finger print signal has to be detected to identify a genuine copy-protected program distribution medium.

10. A method of providing copy-protection for program distribution media as claimed in Claim 9, wherein said program distribution medium is an optical disc.

11. A method of providing copy-protection for program distribution media as claimed in Claim 9 or Claim 10, further comprising the step of encoding the program data (22) before it is recorded onto the program distribution medium.

12. A method of providing copy-protection for program distribution media as claimed in Claim 11, wherein said finger print signal (12) is inserted into the program data before the program data is encoded.

13. A method of providing copy-protection for program distribution media as claimed in any of Claims 9 to 12, wherein said program data comprises a video signal (22), and wherein said finger print signal comprises a small additional lift to said video signal on a first field and a small lower lift on a second field during multiple frames of said video signal.

14. Apparatus for providing copy-protection to program distribution media, said apparatus (10) comprising mastering means (16) for recording program data (22) onto a program distribution medium, and means (24) for generating an authenticating signal and outputting the authenticating signal to said mastering means (16), wherein, in response to said authenticating signal, said mastering means (24) adds an authenticating signature to the program distribution medium to provide copy-protection therefor, the authenticating signature being arranged to be unreadable by means able to read the recorded program data, said apparatus (10) being characterised by further comprising a finger print inserter (12) arranged to generate and add a finger print signal to the program data to be recorded on the program distribution medium if an authenticating signature is added to that program distribution medium such that a copy-protected program distribution medium has both an authenticating signature and a finger print signal.

15. Apparatus for providing copy-protection to program distribution media as claimed in Claim 14, wherein said program distribution medium is an optical disc.

16. Apparatus for providing copy-protection to program distribution media as claimed in Claim 14 or Claim 15, wherein the output of said finger print inserter (12), on which program data with an added finger print signal is output, is coupled to an encoding device (14) for encoding the program data, the output of said encoding device (14) being coupled to said mastering means (16).

## Patentansprüche

1. Verfahren zur Steuerung des Lesens von kopiergeschützten Programmverteilungsmedien, wobei kopiergeschützte Programmverteilungsmedien darauf aufgezeichnete Programmdaten und eine dazu hinzugefügte Authentifizierungs-Signatur (50) enthalten, wobei die Authentifizierungs-Signatur nicht durch Einrichtungen gelesen werden kann, mittels derer die aufgezeichneten Programmdaten gelesen werden,
wobei das Verfahren die Schritte umfaßt:
Erfassen (38) des Vorhandenseins der Authentifizierungs-Signatur in einem Medien-Abspielgerät (30); und
Verwenden der Erfassung der Authentifizierungs-Signatur, um das Lesen der aufgezeichneten Programmdaten durch das Medien-Abspielgerät (30) zu steuern;
wobei das Verfahren dadurch gekennzeichnet ist, daß die kopiergeschützten Programmverteilungsmedien zusätzlich ein Fingerabdruck-Signal (52) enthalten, das zu den darauf aufgezeichneten Programmdaten hinzugefügt ist; und
daß das Verfahren außerdem den Schritt des Erfassens (48) des Vorhandenseins des Fingerabdrucks in den auf einem Programmverteilungsmedium aufgezeichneten Programmdaten und das Aktivieren des Medien-Abspielgeräts (30) umfaßt, die Programmdaten nur dann zu lesen, wenn entweder kein Fingerabdruck-Signal erfaßt oder sowohl das Fingerabdruck-Signal als auch das Authentifizierungs-Signal erfaßt werden.

2. Verfahren zur Steuerung des Lesens von kopiergeschützten Programmverteilungsmedien nach Anspruch 1, wobei das Programmverteilungsmedium eine optische Speicherplatte ist.

3. Verfahren zur Steuerung des Lesens von kopiergeschützten Programmverteilungsmedien nach Anspruch 1 oder Anspruch 2, wobei die Programmdaten kodiert werden, bevor sie auf dem Programmverteilungsmedium aufgezeichnet werden, und wobei das Verfahren außerdem den Schritt des Dekodierens der aufgezeichneten Programmdaten in dem Medien-Abspielgerät (30) umfaßt.

4. Gerät zum Lesen von kopiergeschützten Programmverteilungsmedien, wobei kopiergeschützte Programmverteilungsmedien darauf aufgezeichnete Programmdaten und eine dazu hinzugefügte Authentifizierungs-Signatur (50) enthalten, wobei die Authentifizierungs-Signatur nicht durch Einrichtungen gelesen werden kann, mittels derer die aufgezeichneten Programmdaten gelesen werden, wobei das Gerät (30) einen Authentifizierungs-Signatur-Detektor (38) und eine Steuerungseinrichtung (54, 58, 40) enthält, die auf die Ausgabe von dem Authentifizierungs-Signatur-Detektor (38) anspricht, um die Eingabe aufgezeichneter Programmdaten von einem Programmverteilungsmedium zu einer Datenausgabeeinrichtung des Geräts (30) steuern, das dazu ausgestaltet ist, die aufgezeichneten Programmdaten zu lesen, wobei das Gerät dadurch gekennzeichnet ist, daß die kopiergeschützten Programmverteilungsmedien außerdem ein Fingerabdruck-Signal (52) enthalten, das zu den darauf aufgezeichneten Programmdaten hinzugefügt ist, daß das Gerät (30) außerdem einen Fingerabdruck-Detektor (48) aufweist, um das Vorhandensein des Fingerabdrucks in den auf einem Programmverteilungsmedium aufgezeichneten Programmdaten zu erfassen, und daß die Steuerungseinrichtung (54, 58, 40) außerdem auf die Ausgabe von dem Fingerabdruck-Detektor (48) anspricht und dazu ausgestaltet ist, die Eingabe aufgezeichneter Programmdaten von einem Programmverteilungsmedium zu der Datenausgabeeinrichtung nur dann zu aktivieren, wenn entweder kein Fingerabdruck-Signal erfaßt wird oder sowohl das Fingerabdruck-Signal als auch die Authentifizierungs-Signatur erfaßt werden.

5. Gerät zum Lesen von kopiergeschützten Programmverteilungsmedien nach Anspruch 4, wobei das Programmverteilungsmedium eine optische Speicherplatte ist.

6. Gerät zum Lesen von kopiergeschützten Programmverteilungsmedien nach Anspruch 4 oder Anspruch 5, wobei die aufgezeichneten Programmdaten ein Video-Signal umfassen, und die Datenausgabeeinrichtung ein Video- und Audio-Ausgabesystem ist.

7. Gerät zum Lesen von kopiergeschützten Programmverteilungsmedien nach einem der Ansprüche 4 bisXwobei die Steuerungseinrichtung (54, 58, 40) einen Auswahl-Schalter (40) aufweist, der steuerbar ist, um aufgezeichnete Programmdaten mit der Datenausgabeeinrichtung zu koppeln.

8. Gerät zum Lesen von kopiergeschützten Programmverteilungsmedien nach Anspruch 7, wobei der Auswahl-Schalter (40) mit der Ausgabe von einem Programmdaten-Dekodierer (36) verbunden ist.

9. Verfahren zum Bewirken von Kopierschutz für Programmverteilungsmedien, wobei das Verfahren die Schritte des Aufzeichnens von Programmdaten (22) auf ein Programmverteilungsmedium und das Hinzufügen einer Authentifizierungs-Signatur zu dem Programmverteilungsmedium umfaßt, wobei die Authentifizierungs-Signatur dazu ausgestaltet ist, um nicht durch Einrichtungen gelesen werden zu können, mittels derer die Programmdaten gelesen werden können, um für das Programmverteilungsmedium Kopierschutz zu bewirken, wobei das Verfahren dadurch gekennzeichnet ist, daß es außerdem die Schritte des Hinzufügens eines Fingerabdruck-Signals (12) zu den auf dem Programmverteilungsmedium aufgezeichneten Programmdaten (22) umfaßt, so daß das Vorhandensein von sowohl einer Authentifizierungs-Signatur als auch einem Fingel erfaßt werden muß, um ein originales kopiergeschütztes Programmverteilungsmedium zu erkennen.

10. Verfahren zum Bewirken von Kopierschutz für Programmverteilungsmedien nach Anspruch 9, wobei das Programmverteilungsmedium eine optische Speicherplatte ist.

11. Verfahren zum Bewirken von Kopierschutz für Programmverteilungsmedien nach Anspruch 9 oder Anspruch 10, außerdem mit dem Schritt des Kodierens der Programmdaten (22), bevor sie auf das Programmverteilungsmedium aufgezeichnet werden.

12. Verfahren zum Bewirken von Kopierschutz für Programmverteilungsmedien nach Anspruch 11, wobei das Fingerabdruck-Signal (12) in die Programmdaten eingefügt wird, bevor die Programmdaten kodiert werden.

13. Verfahren zum Bewirken von Kopierschutz für Programmverteilungsmedien nach einem der Ansprüche 9 bis 12, wobei die Programmdaten ein Videosignal (22) umfassen und wobei das Fingerabdruck-Signal eine kleine zusätzliche Anhebung des Videosignals auf einem ersten Gebiet und eine kleine geringere Anhebung auf einem zweiten Gebiet während mehrerer Bilder des Videosignals enthält.

14. Gerät zum Bewirken von Kopierschutz für Programmverteilungsmedien, wobei das Gerät (10) eine Master-Einrichtung (16) zum Aufzeichnen von Programmdaten (22) auf ein Programmverteilungsmedium und eine Einrichtung (24) zum Erzeugen eines Authentifizierungs-Signals und zum Ausgeben des Authentifizierungs-Signals zu der Master-Einrichtung (16) enthält, wobei die Master-Einrichtung (24) in Reaktion auf das Authentifizierungs-Signal eine Authentifizierungs-Signatur zum Programmverteilungsmedium hinzufügt, um dafür Kopierschutz zu bewirken, wobei die Authentifizierungs-Signatur dazu ausgestaltet ist, um nicht durch Einrichtungen gelesen werden zu können, mittels derer die aufgezeichneten Programmdaten gelesen werden können, wobei das Gerät (10) dadurch gekennzeichnet ist, daß es außerdem eine Fingerabdruck-Einfüge-Einrichtung (12) aufweist, die dazu ausgestaltet ist, um ein Fingerabdruck-Signal zu erzeugen und es den Programmdaten hinzuzufügen, die auf das Programmverteilungsmedium aufgezeichnet werden, wenn eine Authentifizierungs-Signatur zu dem Programmverteilungsmedium hinzugefügt wird, so daß ein kopiergeschütztes Programmverteilungsmedium sowohl eine Authentifizierungs-Signatur als auch ein Fingerabdruck-Signal enthält.

15. Gerät zum Bewirken von Kopierschutz für Programmverteilungsmedien nach Anspruch 14, wobei das Programmverteilungsmedium eine optische Speicherplatte ist.

16. Gerät zum Bewirken von Kopierschutz für Programmverteilungsmedien nach Anspruch 14 oder Anspruch 15, wobei die Ausgabe der Fingerabdruck-Einfüge-Einrichtung (12), auf der Programmdaten mit einem hinzugefügten Fingerabdruck-Signal ausgegeben werden, mit einer Kodier-Einrichtung (14) gekoppelt ist, um die Programmdaten zu kodieren, wobei die Ausgabe der Kodier-Einrichtung (14) mit der Master-Einrichtung (16) gekoppelt ist.

## Revendications

1. Procédé de commande de la lecture de supports de distribution de programmes protégés contre la copie, dans lequel on a enregistré des données sur des supports de distribution de programmes protégés contre la copie, et auxquels une signature (50) d'authentification a été ajoutée, laquelle signature d'authentification ne peut pas être lue par le moyen lisant les données de programme enregistrées ;
le procédé comprenant les étapes consistant :
à détecter (38) la présence de la signature d'authentification dans un lecteur (30) de support ; et
à utiliser la détection de la signature d'authentification pour commander la lecture des données de programme enregistrées par le lecteur (30) de support ;
le procédé étant caractérisé en ce que les supports de distribution de programmes protégés contre la copie comportent en plus un signal (52) d'empreinte digitale qui a été ajouté aux données de programme qui y sont enregistrées ; et
en ce que le procédé comprend en outre l'étape de détection (48) de la présence de l'empreinte digitale dans les données de programme enregistrées sur un support de distribution de programmes, et d'activation du lecteur (30) de support pour lire les données de programme seulement lorsque soit l'on ne détecte pas de signal d'empreinte digitale, soit l'on détecte à la fois le signal d'empreinte digitale et le signal d'authentification.

2. Procédé de commande de la lecture de supports de distribution de programmes protégés contre la copie selon la revendication 1, dans lequel ledit support de distribution de programmes est un disque optique.

3. Procédé de commande de la lecture de supports de distribution de programmes protégés contre la copie selon la revendication 1 ou la revendication 2, dans lequel les données de programme ont été codées avant d'être enregistrées sur le support de distribution de programmes, et dans lequel le procédé comprend en outre l'étape de décodage, dans le lecteur (30) de support, des données de programme enregistrées.

4. Appareil de lecture de supports de distribution de programmes protégés contre la copie, dans lequel on a enregistré des données sur des supports de distribution de programmes protégés contre la copie, et auxquels une signature (50) d'authentification a été ajoutée, laquelle signature d'authentification ne peut pas être lue par le moyen lisant les données de programme enregistrées, ledit appareil (30) comprenant un détecteur (38) de signature d'authentification, et un moyen (54, 58, 40) de commande sensible à la sortie du détecteur (38) de signature d'authentification pour commander l'entrée de données de programme enregistrées provenant d'un support de distribution de programmes dans un dispositif de sortie de données de l'appareil (30) agencé pour lire les données de programme enregistrées, ledit appareil étant caractérisé en ce que le support de distribution de programmes protégés contre la copie comporte de plus un signal (52) d'empreinte digitale ajouté aux données de programme qui y sont enregistrées, en ce que l'appareil (30) comprend en outre un détecteur (48) d'empreinte digitale destiné à détecter la présence de l'empreinte digitale dans les données de programme enregistrées sur un support de distribution de programmes, et en ce que ledit moyen (54, 58, 40) de commande est de plus sensible à la sortie du détecteur (48) d'empreinte digitale et est agencé pour permettre l'entrée des données de programme enregistrées provenant d'un support de distribution de programmes dans ledit dispositif de sortie seulement lorsque soit l'on ne détecte pas de signal d'empreinte digitale soit l'on détecte à la fois le signal d'empreinte digitale et la signature d'authentification.

5. Appareil de lecture de supports de distribution de programmes protégés contre la copie selon la revendication 4, dans lequel ledit support de distribution de programmes est un disque optique.

6. Appareil de lecture de supports de distribution de programmes protégés contre la copie selon la revendication 4 ou la revendication 5, dans lequel lesdites données de programme enregistrées comprennent un signal vidéo, et ledit dispositif de sortie de données est un système de sortie vidéo et audio.

7. Appareil de lecture de supports de distribution de programmes protégés contre la copie selon l'une quelconque des revendications 4 à 6, dans lequel ledit moyen (54, 58, 40) de commande comprend un commutateur sélecteur (40) pouvant être commandé pour connecter les données de programmes enregistrées audit dispositif de sortie de données.

8. Appareil de lecture de supports de distribution de programmes protégés contre la copie selon la revendication 7, dans lequel ledit commutateur sélecteur (40) est connecté à la sortie d'un décodeur (36) de données de programme.

9. Procédé de réalisation d'une protection contre la copie pour des supports de distribution de programmes, le procédé comprenant les étapes consistant à enregistrer des données (22) de programme sur un support de distribution de programmes, et à ajouter une signature d'authentification au support de distribution de programmes, la signature d'authentification étant conçue pour être illisible par le moyen capable de lire les données de programme pour procurer une protection contre la copie au support de distribution de programmes, le procédé étant caractérisé en ce qu'il comprend en outre l'étape consistant à ajouter un signal (12) d'empreinte digitale aux données (22) de programme enregistrées sur le support de distribution de programmes de façon telle que l'on doive détecter l'existence à la fois d'une signature d'authentification et d'un signal d'empreinte digitale pour identifier un support authentique de distribution de programmes protégés contre la copie.

10. Procédé de réalisation d'une protection contre la copie pour des supports de distribution de programmes selon la revendication 9, dans lequel ledit support de distribution de programmes est un disque optique.

11. Procédé de réalisation d'une protection contre la copie pour des supports de distribution de programmes selon la revendication 9 ou la revendication 10, comprenant en outre l'étape de codage des données (22) de programme avant qu'elles soient enregistrées sur le support de distribution de programmes.

12. Procédé de réalisation d'une protection contre la copie pour des supports de distribution de programmes selon la revendication 11, dans lequel ledit signal (12) d'empreinte digitale est inséré dans les données de programme avant de coder les données de programme.

13. Procédé de réalisation d'une protection contre la copie pour des supports de distribution de programmes selon l'une quelconque des revendications 9 à 12, dans lequel lesdites données de programme comprennent un signal vidéo (22), et dans lequel ledit signal d'empreinte digitale comprend une petite élévation additionnelle audit signal vidéo sur une première trame et une petite élévation plus basse sur une seconde trame pendant de multiples vues dudit signal vidéo.

14. Appareil destiné à procurer une protection contre la copie à des supports de distribution de programmes, ledit appareil (10) comprenant un moyen (16) de création d'original destiné à enregistrer des données (22) de programme sur un support de distribution de programmes, et un moyen (24) destiné à engendrer un signal d'authentification et à sortir le signal d'authentification vers ledit moyen (16) de création d'original, dans lequel, en réponse audit signal d'authentification, ledit moyen (24) de création d'original ajoute une signature d'authentification au support de distribution de programmes pour procurer ainsi une protection contre la copie, la signature d'authentification étant agencée de façon à être illisible par le moyen capable de lire les données de programme enregistrées, ledit appareil (10) étant caractérisé en ce qu'il comprend en outre un dispositif (12) d'insertion d'empreinte digitale conçu pour engendrer et pour ajouter un signal d'empreinte digitale aux données de programme à enregistrer sur le support de distribution de programmes si une signature d'authentification est ajoutée à ce support de distribution de programmes, de façon qu'un support de distribution de programmes protégé contre la copie possède à la fois une signature d'authentification et un signal d'empreinte digitale.

15. Appareil destiné à procurer une protection contre la copie à des supports de distribution de programmes selon la revendication 14, dans lequel ledit support de distribution de programmes est un disque optique.

16. Appareil destiné à procurer une protection contre la copie à des supports de distribution de programmes selon la revendication 14 ou la revendication 15, dans lequel ledit dispositif (12) d'insertion d'empreinte digitale, sur laquelle sont sorties les données de programme avec un signal d'empreinte digitale ajouté, est couplé à un dispositif (14) de codage destiné à coder les données de programme, la sortie dudit dispositif (14) de codage étant couplée audit moyen (16) de création d'original.
